# EUROPEAN PATENT APPLICATION

(11) **EP 1 385 324 A1**
(43) Date of publication of application: **28.01.2004**
(21) Application number: 02016435.6
(22) Date of filing: 22.07.2002
(51) Int. Cl.: H04M 9/08, H04M 1/60

(54) **A system and method for reducing the effect of background noise**

(71) Applicant: SIEMENS AKTIENGESELLSCHAFT, 80333 München (DE)
(72) Inventor: Pedersen, Jens Erik, 9000 Alborg (DK)

(57) **Abstract**

Acoustical signals are collected with two microphones having different sensitivity to background noise. The level of background noise is estimated, and depending of the level of background noise, i) the amplification gain of the signals is modified before the signals are combined to a combined signal, or ii) the way of combining the signals is changed, to produce a signal that has less background noise than one of the microphones.

## Description

### Field of the invention

The invention relates generally to enhancing speech quality in a telecommunications system, and more specifically to reducing the effect of background noise in the communication between users.

### Background of the invention

Due to the recent explosive increase in the mobile device penetration, it is no more surprising to see people going on the sidewalk or pedestrian area with a mobile phone on their ear. The mobile phone is considered as a practical tool and it is supposed to be carried with to almost anywhere. People are supplied with
means for being within reach in principle independently of time and location. As a consequence it may sometimes happen that the surroundings are not optimal for convenient telephoning. In fact, the sight of people trying to make a phone call in noisy places, such as restaurants or street corners, is getting more common all the time.

Technically, to provide the user with a microphone system which operates in a difficult acoustic environment has not been a difficult task in many years. For example, U.S. patent 5,327,506 discloses a speaker/microphone system that should be applicable in background noise levels up to far beyond over 100 decibels. Such a system is suitable for persons in high ambient noise environments, such as for helicopter pilots. The idea in 506 is that the outgoing voice sounds are taken from the air within the external auditory canal of a person while substantially eliminating audio vibration pickup of sound transmitted by bone conduction.

Another approach for high background noise microphone arrangements is found in U.S. patent 5,659,620. Here the microphone holder is designed for arrangement in its entirety in the outer ear outside the auditory meatus, and the microphone unit being mounted in vibration transmitting tissue contact in a part of the edge of the holder facing the bottom of tragus. As one of the benefits, all surround tones are not cut off thus increasing the comfort of wearing such a device. When people talk, vibrations in the throat and vocal cords are generated. The vibrations propagate through the bony and liquid-filled tissue, and the idea in 620 is that the jawbone which passes near the front part of the outer ear produces a strong transmission and transfers considerably more of the persons speech than if the signal were collected in the throat.

The idea of getting almost a background free aural image from inside the ear has also been adapted within the area of mobile communications, as illustrated in the international patent application WO 02/07477. In order to reduce and isolate bone conduction of sound, a sound isolation cup serves as a jacket that surrounds a miniature transducer inside the housing of a microphone/loudspeaker element that is placed in the ear.

However, under low background noise circumstances, the solutions above suffer from a poorer acoustical quality than an ordinary microphone system. In the 620 approach discussed above, the low spectrum dominates the transmitted sound spectrum because of the acoustical properties of the tissue. This means that in order to keep the sound quality acceptable, or at least to have a proper balance in the sound, the low frequencies have to be filtered. In the other two approaches discussed above, because the acoustic conduct from the speech producing organs to the ear is far from optimal, the sound quality gets badly distorted. Hence, prior art solutions can only be considered as enabling solutions, and in order to keep in pace with the challenging market, the wishes of the quality-conscious consumers of a mobile device with a good sound quality and a possibility to use the device also under high background noise conditions need to be fulfilled. The prior art solutions do not serve this purpose.

It is an object of the invention to bring about a system and method which provides the users of mobile devices with the best possible audio quality under high background noise circumstances and otherwise reduces the effect of the background noise.

### Summary of the invention

This and other objectives of the invention are accomplished in accordance with the principles of the present invention by providing a system in which the processing of collected audio information is changed according to the estimated level of background noise thus reducing its overall effect.

More specifically, audio information is collected with two transducers having different sensitivity to the background noise. The background noise is estimated and i) amplification gain of the signals is modified before the signals are combined to a combined signal, or ii) the way of combining the signals is changed, which can be done either digitally or analogously.

According to the first embodiment of the invention, gain of at least one of the amplifiers adapted to amplify the detected signal is adjusted based on the noise estimate. The signal is then amplified using the adjusted gain thus producing at least one amplified signal. After this step, a combined signal is constructed from one or more of the amplified signals, and in the combined signal, the proportion of background noise is less than in one of the detected signals.

According to one aspect of the present invention, the system has also storage means for storing at least one noise estimate, and, correspondingly, also comparison means to compare said stored noise estimate with a predefined threshold value. After the comparison, a differential noise estimate is passed to gain control means.

According to another aspect of the present invention, the system comprises storage means for storing at least two gain control parameters and comparison means for comparing at least two stored gain control parameters. The result of the comparison may be a differential gain parameter to be passed to the amplification means.

According to another aspect of the present invention, the gain control is adjusted to change the gain between the first and second microphones so that the gain of the first microphone is increased whereas the gain of the second microphone is decreased if the noise estimate indicates that the background noise level is above a first threshold value. Further, the gain control can be adjusted to change the gain of the second microphone substantially close to zero value if the background noise estimate shows that the background noise level is above a second threshold value. Respectively, they can be adapted to adjust the relative gain of the first microphone substantially close to one if the background noise estimate shows that the background noise level is above a pre-set threshold value.

In one preferred embodiment of the invention the first microphone is to be placed in the auditory canal of a user of the mobile handset; also a jawbone microphone can be used. The second microphone may be a microphone mounted in the mobile handset or in a vehicle, or it may be fixed in a hands-free set of a mobile handset. Examples of such mobile handsets where the invention may be used are mobile phones, PDA devices, laptop computers, dictation machines and so forth.

### Brief Description of the Drawings

In the following, the invention and its preferred embodiments are described more closely referring to the examples shown in FIG. **1-7** in the appended drawings, wherein:
- FIG. **1**: illustrates one system for reducing the effect of background noise,
- FIG. **2**: illustrates another system for reducing the effect of background noise,
- FIG. **3**: shows one microphone set-up according to a preferred embodiment of the invention,
- FIG. **4A**: shows another microphone set-up according to another preferred embodiment of the invention,
- FIG. **4B**: illustrates a variation of the set-up shown in FIG. **4A**,
- FIG. **5**: shows one audio data collection set-up including two microphones,
- FIG. **6**: illustrates the relationship between noise level estimate and gains with which the signals detected by the microphones are amplified, and
- FIG. **7**: illustrates how a switch can be included into the system.

### Detailed description of the invention

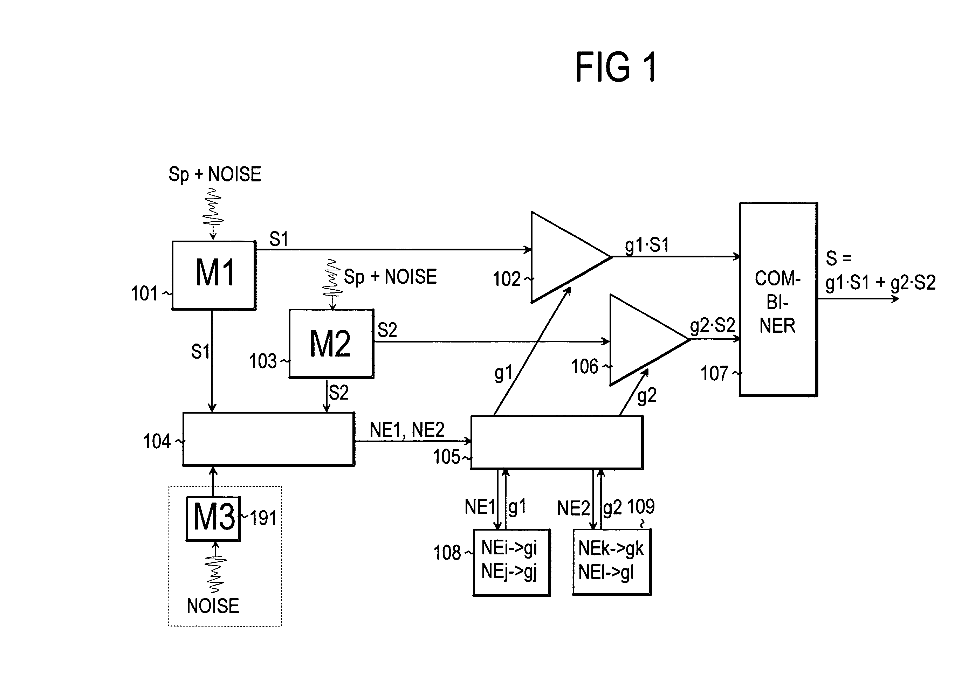

FIG. **1** illustrates a first system for reducing the effect of background noise, for example, in a microphone. Mechanical vibrations or pressure variations, preferably originating from speech **S**_{**p**} distorted by noise, is collected with a first transducer serving as a microphone **101**, producing a signal **S**_{**1**} which is then amplified with a gain **g**_{**1**} using an amplifier **102** to produce an amplified signal **g**_{**1**}**S**_{**1**}. The system also includes another microphone **103** and a corresponding amplifier **106**, the microphone **103** similarly being exposed to speech **S**_{**p**} and background noise and producing first a signal **S**_{**2**} which is after amplification denoted by **g**_{**2**}**S**_{**2**}, where **g**_{**2**} corresponds to the gain of the amplifier **106**. Both microphones **101** and **103** are transducers that convert acoustical or mechanical vibrations to an electric signal, i.e. normally to a small current, and they exhibit different sensitivity to background noise. The reason for the different noise sensitivity may be that the first microphone **101** is a bone conductor microphone or an earplug type microphone, whereas the second microphone **103** is a normal type transducer commonly used as a microphone in mobile terminals, and therefore more sensitive to noise than the aforementioned types of microphones.

Preferably, the microphones **101** and **103** are assembled to receive human speech **S**_{**p**}, and in particular such a speech that is going to be further processed in a mobile terminal to be sent to a remote party of the discussion. It is by no means necessary that the speech **S**_{**p**} to be collected by the microphone (**101** or **103**) is originating from a single person, but may be originating from a conference call etc.

The output signals **S**_{**1**} and **S**_{**2**} of the microphones **101** and **103** are transmitted to a noise estimator **104** which includes means adapted to estimate background noise level thus producing noise estimates **NE**_{**1**} and **NE**_{**2**}. The noise level can be estimated for both microphones **101** and **103** separately, the output signals **S1** and **S2** of both microphones **101** and **103** may be used to obtain a combined signal from which the noise is estimated, or only the output of the microphone **103** more sensitive to background noise may be used for noise estimation. In the latter two cases only one noise estimate is produced.

For example, the noise estimation can be done by averaging short periods of the signal **S1** or **S2**. During a silent period, i.e. when the user does not speak, the measured signal level is a good approximation of the background noise. This kind of approach is commonly used in the Discontinuous Transmission DTX widely used in the Global System for Mobile communications GSM, when instead of the coded silence only so called DTX parameters describing the nature of the background noise are sent, thus reducing obsolete usage of the air interface. The DTX parameters are received in the remote end or in the network between persons talking to each other and some noise similar to background is generated, calling this generated noise Comfort Noise. The idea of Comfort Noise comes from the observation that if during a telephone conversation the loudspeaker gets silent while one person is talking, he or she does not feel comfortable. Modern GSM mobile phones, for example, thus already have means for estimating and describing background noise. Similar means can be applied in the noise estimator 104 for serving the implementation of the invention.

The noise estimates **NE**_{**1**} and **NE**_{**2**} generated are passed to a gain control means **105**. The gain control means **105** adjust the gain **g**_{**1**}, **g**_{**2**} of the both amplifiers **102** and **106**. In the adjustment, a noise estimate **NE**_{**1**} or **NE**_{**2**} is used to determine the desired amplification gain. For this purpose the system may include storage means for noise-amplification relationships, including means **108** and **109**, e.g. tables or functions which respond with a desired gain level **g**_{**x**} to a query including a corresponding noise level **NE**_{**x**}. For example, means 108 return a gain value **g**_{**1**} in response to noise estimate **NE**_{**1**}, and means **109** return a gain value **g**_{**2**} in response to noise estimate **NE**_{**2**}.

In other words, means **108** and **109** tell the gain control means **105** what is the optimal relation between a noise estimate NEₓ and an amplifier gain gₓ. Means **108** and **109** are preferably microphone specific, i.e. there are two tables in the system. The gain control means **105** get the noise estimate NEₓ, retrieve the gain values gₓ corresponding the estimate of present noise NEₓ and determine how the gain **g**_{**1**} and **g**_{**2**} of the amplifiers **102** and **106** is to be adjusted. In principle, the gain values **g**_{**1**} and **g**_{**2**} get values between 0 and 1 so that g₁ + g₂ = 1.

After passing the gain adjustment information **g**_{**1**} and **g**_{**2**} to the amplifiers **102** and **106**, the amplifiers amplify the signals S₁ and S₂ using the amplifier gain set based on the gain adjustment information. After amplifying, a combined signal **S** is constructed in the combining means **107**, the construction being made using the amplified signals **g**_{**1**}**S**_{**1**} and **g**_{**2**}**S**_{**2**}. This may include changing the delay and phase of at least one of the signals gₓSₓ so that the distortion resulting from the amplification and the signal path is minimised, and finally summing up the signals gₓSₓ so that the combined signal **S** represents a linear combination of the signals **S**_{**1**} and **S**_{**2**} detected by the microphones **101** and **103**. This constructed signal S is then ready for being processed further, including all of the numerous steps necessary for transmitting the audio information over the air interface. The combined signal **S** has a smaller proportion of background noise than the output signal **S**_{**2**} of microphone **103** collected. In this way the effect of background noise can be reduced.

Preferably, the tables **108** and **109** are generated so that corresponding to a change ΔNE (=NEₜ=ₜ₂-NEₜ=ₜ₁) in the noise level NEₓ there is a corresponding change Δg (=gₜ₌ₜ₂-gₜ=ₜ₁) in the gain value gₓ. As characteristic to one aspect of the present invention, the gain adjustments of the amplifiers **102**, **106** are opposed to each other; i.e. when the background noise is increasing, the gain **g**_{**1**} of the signal detected by the first (low-noise) microphone **101** is increased whereas the gain **g**_{**2**} of the signal detected by the second (more sensitive to background noise) microphone **103** is decreased. It is favourable to normalise the gains so that the relative gain for the both microphones equals to 1.

In other words, the means **108** and **109** are modified to correspond to the different noise behaviour of the two transducers so that the linear combination of the signals **S = g**_{**1**}**S**_{**1**} + **g**_{**2**}**S**_{**2**} detected by the two transducers serving as microphones **101** and **103** can be subjectively (by listening) considered optimal. This may include different threshold values: The first threshold value corresponds to the value of at least one of the noise estimates, at which value the quality of signal **S**_{**2**} of the second microphone **103** that is more sensitive to background noise starts to deteriorate; this is the point where the relative gain of the first microphone **101** is increased from substantially zero gain value to a small value. The second threshold value corresponds to the value of at least one of the noise estimates NEₓ at which the quality of the detected signal of the second microphone **103** is so much worse than the quality of the signal **S**_{**1**} detected by the first microphone **101** that the relative gain **g**_{**2**} of the second microphone **103** is set to substantially zero gain.

As an example, if the first microphone detects a background noise level of 2,0 mV (corresponding to a noise 70 dB) and the second microphone detects a background noise level of 5,0 mV (corresponding to a noise of 72 dB), the average noise level estimated in the noise estimator may be between 70 and 72 dB. The relative gains for the microphones read from the table are then 0,4 and 0,6, respectively. This is not straightforward, because the sensitivity of the microphone plays a significant role; the signal levels may need to be adjusted to correspond some reference level. The relative gains are then to be understood against this reference level only.

When the detected background noise jumps to 2,2 mV (71 dB) and 7,0 mV (76 dB), the average noise level may be estimated to be between 71 and 76 dB. The relative gains for the microphones read from the table are then 0,95 and 0,05, respectively. The second microphone is more sensitive to the background noise, i.e. the background noise generates a bigger impulse in the microphone. Secondly, the second microphone is not yet shut-off completely, because the noise level is not above a defined shut-off threshold value for background noise.

The transition at different moments of time between subsequent values of the relative signal **S**_{**1**} and **S**_{**2**} proportions in the combined signal **S** defined by a ratio **g**_{**1**}**/g**_{**2**} (when g2≠0) can thus be made smooth or at least to correspond small steps in order to avoid abrupt transitions that might be considered annoying by the listener. This corresponds to successive changes of **g**_{**1**} and **g**_{**2**}. Nevertheless, it is to be noted that this is not necessary, but the transition may resemble a step function, i.e. the gain **g**_{**1**} for the signal detected by the first microphone **101** is zero below a threshold value and one otherwise, and the gain **g**_{**2**} for the signal detected by the second microphone is then reversed, i.e. it obtains values 1-**g**_{**1**}.

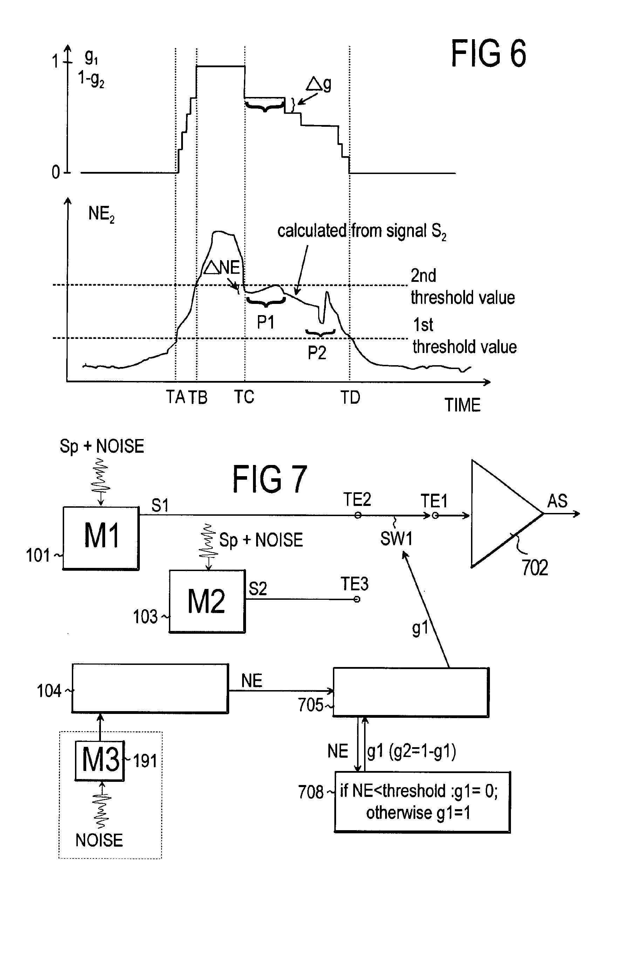

FIG. **6** shows an example of the relation between estimated noise level **NE**_{**2**} estimated from the signal **S**_{**2**}, and the amplifier gain g₁. In this case, g₂=1-**g**_{**1**}. At times preceding **TA**, **NE**_{**2**} is smaller than the first threshold value. Correspondingly, **g**_{**1**}=0 and g₂=1. At **TA**, the value of **NE**_{**2**} is increasing, so **g**_{**1**} is stepwise increased. At **TB**, **NE**_{**2**} has reached the second threshold value, and **g**_{**1**} is set to one. At **TC, NE**_{**2**} is again smaller than the second threshold value, so the value of **g1** must be decreased. At **TD, NE**_{**2**} falls below the first threshold value and **g1** is set to zero value. At the time interval **P**_{**1**} the change in **NE**_{**2**} is less than the threshold **ΔNE** set for the change of **NE**, so during this interval **g**_{**1**} is not changed. Immediately after **P**_{**1**}, when the change in **NE**_{**2**} is larger than the threshold value, the **g**_{**1**} is changed by **Δg**. During the interval **P**_{**2**}, **g**_{**1**} is not changed because **NE**_{**2**} shows sharp peaks; this may present some distortion so the changes are neglected.

The second predefined threshold value can be chosen to be a fixed value as well. The value may be experimentally determined to correspond to the level of background noise in which the input signal of the second microphone **103** has been deteriorated in such a bad way that in order to get a better signal quality for the signal **S,** only the input signal **g**_{**1**}**S**_{**1**} is used.

FIG 7 shows how a second system according to the invention, the system having only a stepwise transition for the value of **g**_{**1**}. Speech **Sp** and noise are detected by microphones **101** and **103** producing signals **S1** and **S2**. Background noise is collected by a third microphone **191** directly connected to noise estimator **104**. The noise estimator estimates the level **NE** of background noise and passes it to gain control means **705**. The gain control means **705** are adapted to compare the noise level estimate **NE** with a predefined threshold value. If the value of **NE** is less than the threshold value, **g1** is set to zero, otherwise **g1** gets the value of 1. The value of **g1** indicates the position of a switch **SW1** controlled by the gain control means **705**, the switch **SW1** being so arranged that the terminals **TE1** and **TE2** are connected when **g1=1**; **TE1** and **TE3** are connected in all other cases. The terminal **TE1** leads to amplification means **702** which produce an amplified signal **AS**. Because only one signal is fed (S1, if TE1 and TE2 are connected) to the amplifier, no literal combining of the signals (S1, S2) need to be performed.

The switch turns the relative gain **g**_{**2**} of the second microphone to zero and the relative gain of the first microphone **g**_{**1**} to one. In this case the function of the switch **SW1** and amplification means **702** may be understood as linear amplification with amplification factor 1.0 when the signal received by a microphone is amplified and zero otherwise.

Further, in order to avoid annoying abrupt transitions between the first and second microphones, or to avoid fluctuations in the microphone gains, the system like presented in FIG. **1** may comprise also storing means adapted for storing noise parameters in order to form a noise history. The noise parameters can be calculated for one microphone, both microphones separately or they can be obtained by combining the values computed from the inputs of the both microphones. One possibility is to use the second microphone input as the preferable source for noise estimation, as the first microphone is less sensitive to background noise.

If history data is collected, the system may further be adapted to have a hysteresis effect, i.e. if the noise level is having fluctuations back and forth, the system can adapt the threshold value to correspond a larger shift in the background noise. In order to have a hysteresis effect, there are storage means and comparison means; the hysteresis information may be obtained from a stored table, the table being read in a way taking into account the noise level history.

Similarly, the history data may be used for making prognoses or extrapolations for the noise level, and in this way the system may, based on the noise level measured at least in two earlier moments of time, predict a noise level in the future thus making the possibly larger transitions in gains over a longer period of time.

A third microphone **191** is optionally included in the system. Its main purpose is to detect background noise. It may be located in the vicinity of the noise estimation means **104** so that the transmitting of the signal to the noise estimation means **104** from the microphone **191** is straightforward. In this case the signals **S**_{**1**} and/or **S**_{**2**} need not to be passed from the other two microphones **101** and **103** to the noise estimator **104**. This makes the system simpler, as the signal from microphones **101** and **103** need only travel the path to amplifiers **102** and **106**. For example, in a wireless hands-free set the microphone **101** is located in one ear of the user, whereas the second microphone **103** is fixed in the car of the user. The amplifiers are located close to the microphones, especially because the signals are to be transmitted over the air interface to the combiner means **107**. This means that the noise estimator **104** and gain control means **105** need to instruct the amplifiers **102** and **106** separately; the noise may be measured by the microphone **191**, and the gain parameters **g**_{**1**} and **g**_{**2**} be broadcast to the amplifiers **102** and **106**.

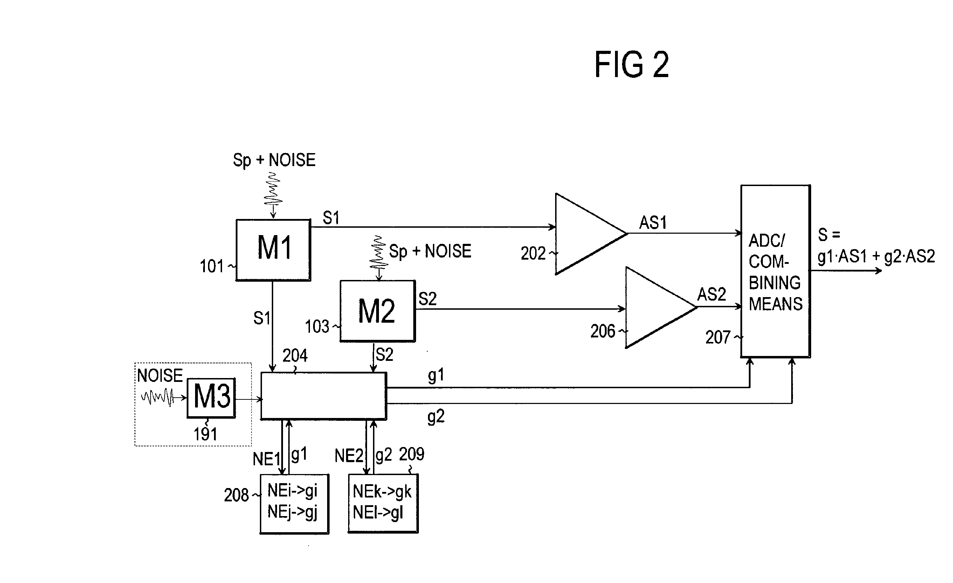

FIG. **2** shows a third system according to the present invention. The transducers **101** and **103** are exposed to speech signal **S**_{**p**} distorted by background noise. They detect acoustical vibrations, i.e. mechanical vibrations or pressure changes. Amplifiers **202** and **206** amplify the signals **S**_{**1**} and **S**_{**2**} with constant gains thus producing amplified signals **AS**_{**1**} and **AS**_{**2**}, respectively. An Analog to Digital Converter ADC **207** converts the signals **AS**_{**1**} and **AS**_{**2**} pre-amplified by amplifiers **102** and **106** into a digital form. In addition to performing this step, the **ADC** may further include combining means to form a combined signal S from at least one of the amplified signals **AS**_{**1**} and **AS**_{**2**} in such a manner that the relative ratio of the signals may be altered. The combining may be performed digitally, thus possibly including multiplication and summing operations, or it may be performed for the analog signals before the conversion.

The noise level is detected in noise estimator **204**, including tables **208** and **209** showing noise responses of the microphones **101** and **103** in a manner similar to the tables discussed above. The noise estimates NEₓ are then used to deduce the target gain factors gₓ. The target gain factors **g**_{**1**} and **g**_{**2**} which correspond to combining parameters are lead to the combining means of the ADC **207**, where the ADC either, based on the combining parameters g₁ and g₂, performs the conversion and only after that digitally multiplies the converted signal by the gain factor, or, uses the target gain factor to change the relative strength of the signals before the conversion.

In a fourth system according to the present invention, the system may have storage means for storing at least one noise estimate **NE**_{**1**} or **NE**_{**2**} in the noise estimator **104**, whereas the system otherwise corresponds to the system already discussed with reference to FIG. **1**. This means that at least one noise estimate NEₜ=ₜₚₐₛₜ value may be stored, and, correspondingly, at a later point in time t=t₁, at least one other noise level estimate NEₜ₌ₜ₁ may be stored as well. The stored noise estimates may be compared using comparison means located preferably in the noise estimator **104**. The comparison may involve computing a noise level difference ΔNE = NEₜ₌ₜ₁-NEₜ₌ₜₚₐₛₜ describing the changing of the background noise level. This difference may be transmitted then to gain control means **105** which change gains according to a function Δg=f(ΔNE). It is also possible that the difference is not passed to gain control means **105** if it does not exceed a preset threshold value, i.e. if ΔNE < ΔNE_{threshold}; only changes in the gain when the change in the background noise level is larger than the threshold value are passed to the amplifier **102** or **106**. In this case the older value measured at tₚₐₛₜ may remain stored in the register and newer noise estimates NE_{t=t1'} calculated at times t_{1'} > t₁ are overwritten on the value NEₜ₌ₜ₁.

A fifth system in accordance with the present invention, the system comprises storage means such as a register in the gain control means **204** in addition to other components as discussed with reference to FIG. **2**. The storage meansmay be used for storing at least two gain control parameters. Further, the system may also include comparison means for comparing at least two stored gain control parameters. Like discussed above, the comparison of the parameters may include performing some mathematical operations, like calculating the difference between a newer and an older gain parameter value, and, in the case that a pre-set threshold value for the difference is exceeded, which can be checked again by comparison, the system may calculate a new gain to be passed to the ADC **207**. The new gain may also be selected from a plurality of different gain set-ups, if the system is to be kept simple and fast.

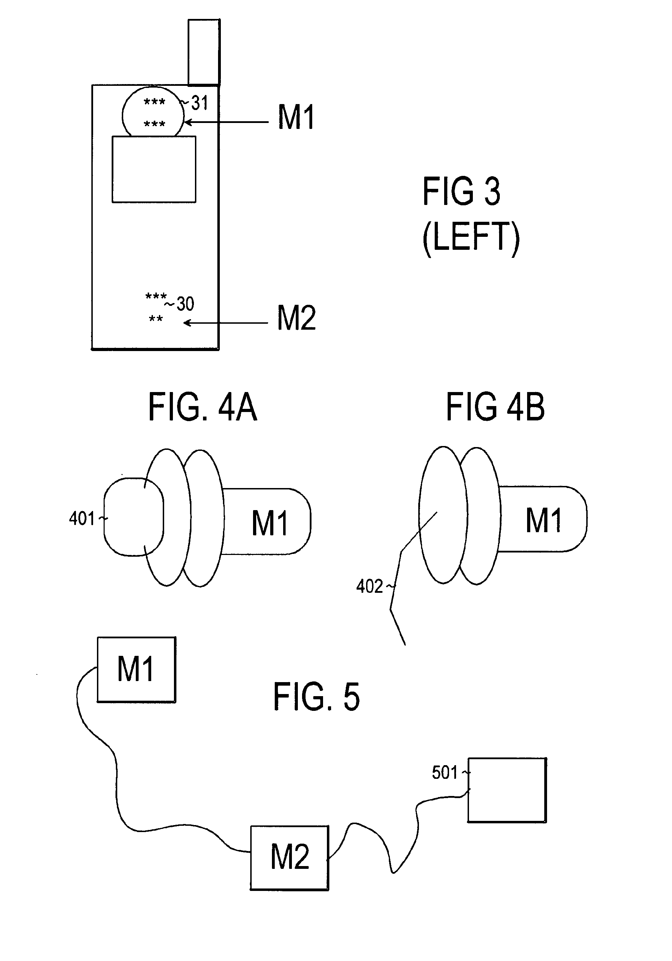

FIG. **3** shows a microphone set-up according to one preferred embodiment of the present invention. The mobile phone in the figure has two microphones **M1** and **M2**. The second microphone **M2** is an ordinary microphone denoted by asterisks **30** describing holes in the cover of the bottom half of the phone. The first microphone **M1** is located close to the loudspeaker which is denoted by asterisks, whereas the microphone **M1** is denoted by arc **31**. Because the loudspeaker is - usually - placed close to the ear, using a jawbone contact element as the microphone **M1**, the vibrations in the jawbone of the user can be detected thus producing a signal S₁. The sensitivity of **M1** to disturbances from the loudspeaker is reduced because **M1** detects mechanical vibrations from the jawbone of the user.

FIG. **4A** further illustrates a microphone set-up according to one other preferred embodiment of the present invention. The first microphone **M1** is located in an earplug-like element which can measure the air vibrations in the ear canal (i.e. auditory canal) of the user of the mobile device. Depending of the actual realisation of the invention, this earplug microphone can be similar to those disclosed in the referenced publications. Some of the prior art earplug microphones have a wireless transmitter, such as a BLUETOOTH transmitter.

A solution according to FIG. **4A** is especially suitable for different hands-free applications. For example, many countries in Europe have recently adopted restrictions for usage of mobile phones while driving a vehicle. In order to comply with the legislation, a driving mobile user willing to receive a phone call need either to stop or to have a hands-free equipment installed in his or her car.

Some hands-free equipment sets include a speaker, a microphone and then some wiring systems, possibly with an extra antenna. The speaker is typically mounted somewhere in the cabin, whereas the microphone is located close to the head of the driver. As known, even though some of the different speech codecs widely used in the mobile devices enhance the speech quality in noisy environments, such as in a moving car, the background noise may still be annoying and, depending of the car, even make the discussion impossible, depending on the circumstances such as other traffic, speed of the vehicle, road conditions etc. This drawback can be eliminated if the user is supplied with an earplug-like device in addition to the normal hands-free set installed in the car. As an alternative, a jawbone microphone can be used as well, while there are some of them available on the market already. Preferably the first microphone (either earplug or jawbone) is equipped with a wireless transmitter. Then either the mobile handset or the hands-free set includes a receiver to receive the transmitted audio information, such as BLUETOOTH low-power RF data.

The transmitter needs not to be wireless but may be a conventional earplug microphone as well like illustrated in FIG. **4B**, where there is a wire including two lines, one for the signal and one for the ground level. In the other end the wires may be connected to the front panel of the car, the panel supplying a plug-in for the microphone data and further connected to the hands-free set, or directly to the mobile handset.

FIG. 5 illustrates another option for implementing the invention. Here the first and second microphones are included in a headset kit of a mobile phone. Typically, the headset kit includes a plug **501** which is connected to a mobile phone or a car front panel. The handset provides hands-free operation and may also include an answer/end button located in the second microphone **M2** or somewhere else in the cable. The earplug including a loudspeaker may also include an earplug microphone **M1**, provided that the acoustical separation of the loudspeaker and microphone can be guaranteed, or a jawbone microphone, where the acoustical separation should be a minor problem.

For a person skilled in the art it is also clear that no implicit tables like those described with reference to FIG. **1** and **2** are necessary. Depending on the number of steps for different amplifications needed, the system can be coded directly if the number is low, otherwise also a numerical model which interpolates some experimentally tested values may also be used.

Although the invention was described above with reference to the examples shown in the appended drawings, it is obvious that the invention is not limited to these, but it may be modified by those skilled in the art without departing from the scope and the spirit of the invention.

## Claims

1. A system for reducing the effect of background noise especially in a mobile handset, the system comprising
- a first transducer (101) for detecting an acoustical signal producing a first signal detected (S1),
- a second transducer (103) for detecting an acoustical signal producing a second signal detected (S2), the first and second transducers having different sensitivities to background noise,
- amplifier means (102, 106) for amplifying the first and/or second signal (S1, S2) detected thus producing at least one amplified signal (g1S1, g2S2),
- noise estimator means (104) adapted to estimate a background noise level present at least in one of the detected signals (S1, S2) or in a signal measured by a third transducer (191) thus producing at least one noise estimate (NE1, NE2),
- gain control means (105), responsive to said noise estimator means (104, 204), adapted to adjust gain (g1, g2) of the amplification means (102, 106, 207), the adjustment being made depending on at least one noise estimate (NE1, NE2), and
- combining means (107), adapted to form a combined signal (S) from at least one amplified signal (g1S1, g2S2) thus reducing the effect of background noise.

2. A system according to claim 1, **wherein** the noise estimator means are connected to the first and/or second transducer (101, 102) for receiving noise level information.

3. A system according to claim 1 or 2, the system further **comprising**
- storage means for storing at least one noise estimate, and
- comparison means for comparing the stored noise estimate with a predefined threshold value, the comparison producing a differential noise estimate to be passed to gain control means (105).

4. A system according to claim 1 or 2, the system further **comprising**
- storage means for storing at least two gain control parameters, and
- comparison means for comparing the two gain control parameters, the comparison producing a differential gain parameter to be passed to the amplification means.

5. A system according to claim 1 or 2, **wherein** the gain control means (105) are adapted to adjust gain (g1, g2) between the first and second amplifiers (102, 106) so that the gain (g1) of the first amplifier (102) is increased whereas the gain (g2) of the second amplifier (106) is decreased if the noise estimate (NE1, NE2) indicates that the background noise level is above a first threshold value.

6. A system according to claim 1, 2 or 5, **wherein** the gain control means (105, 207) are adapted to adjust gain (g2) of the second amplifier substantially close to zero value if the background noise estimate (NE) shows that the background noise level is above a second threshold value.

7. A system according to claim 1, 2, 5 or 6, **wherein** the gain control means (105, 207) are adapted to adjust the relative gain of the first transducer substantially close to one if the background noise estimate (NE) shows that the background noise level is above a pre-set threshold value.

8. A system according to claim 1, **wherein** the construction is performed by adding the amplified signals (g1S1, g2S2).

9. A system according to any one of the preceding claims, **wherein** the first transducer (101) is a microphone to be located in the auditory canal of a user of the mobile handset.

10. A system according to any one of the preceding claims, **wherein** the first transducer (101) is a jawbone microphone.

11. A system according to claim 9 or 10, **wherein** the second transducer (103) is a microphone mounted in the mobile handset.

12. A system according to claim 9 or 10, **wherein** the second transducer (103) is a microphone fixed in a hands-free set of a mobile handset.

13. A system according to claim 1 or 2, **wherein** said gain control means (105, 207) are located in the mobile handset or in the hands-free set of a mobile handset.

14. A method for reducing the effect of background noise especially in a mobile handset, the method **comprising** the steps of
- collecting a first acoustical signal (S1),
- collecting a second acoustical signal (S2), whereby in the collected signals (S1, S2) a different level of background noise is present,
- estimating background noise level from at least one of the signals (S1, S2) collected,
- in response to said estimating step, adjusting gain (g1, g2) of at least one amplifier (102, 106) adapted to amplify signals collected (S1, S2),
- in response to said adjustment step, amplifying said collected first and/or second signal (S1, S2) to produce at least one amplified signal (g1S1, G2S2), and
- in response to said amplifying step, constructing a combined signal (S) from at least one amplified signal (g1S1, g2S2) thus reducing the effect of background noise in the combined signal.

15. A method according to claim 14, further **comprising** the steps of
- producing and storing at least one noise estimate (NE1, NE2) in the background noise estimation step, and
- comparing said stored noise estimate (NE1, NE2) with a predefined threshold value, the comparison result being used in the gain adjustment step.

16. A method according to claim 14, further **comprising** the steps of
- in the gain adjusting step, storing at least two gain control parameters, and
- comparing at least two stored gain control parameters in order to decide whether the gain adjusting step is to be taken, the gain adjusting step being performed only if the comparison result shows that a gain control parameter being larger than a predefined threshold value.

17. A method according to claim 14, **wherein** the gain adjustment step is adapted to adjust amplification balance between the signals detected by first and second transducers (101, 103) so that the gain (g1) of the amplifier (101) amplifying the first signal (S1) collected is increased whereas the gain (g2) of the amplifier (106) amplifying the second signal (S2) is decreased if in the noise estimation step it is detected that the background noise level is higher than a first threshold value.

18. A method according to claim 14, **wherein** the gain adjustment step is adapted to adjust gain (g2) of the amplifier amplifying the second signal (S2) substantially close to zero value if the background noise estimate (NE) shows that the background noise level is above a second threshold value.

19. A method according to claim 14, **wherein** the construction step includes adding the amplified signals (g1S1, g2S2).

20. A method according to any one of claims 14-19, **wherein** the first signal is collected using a microphone to be located in the auditory canal of a user of the mobile handset.

21. A method according to any one of claims 14-19, **wherein** the first signal is collected using a jawbone microphone.

22. A system for reducing the effect of background noise especially in a mobile handset, the system **comprising**
- a first transducer (101) for detecting an acoustical signal producing a first signal detected (S1),
- a second transducer (103) for detecting an acoustical signal producing a second signal detected (S2), the first and second transducer (101, 103) having different sensitivity to background noise,
- amplification means (202, 206) for amplifying the first and/or second signal (S1, S2) detected thus producing at least one amplified signal (AS1, AS2),
- combining means (207) adapted to form a combined signal (S) from at least one of the amplified signals (AS1, AS2) using at least one combining parameter (g1, g2) thus reducing the effect of background noise,
- noise estimator means (204) adapted to estimate background noise level present at least in one of the detected signals (S1, S2) or in a signal measured by a third transducer (191) thus producing at least one noise estimate (NE1, NE2),
- combining parameter generation means (208, 209) adapted to generate at least one combining parameter (g1, g2) in response to at least one noise estimate (NE1, NE2), and
- means (204) for passing the generated combining parameter (g1, g2) to the combining means (207).

23. A method for reducing the effect of background noise especially in a mobile handset, the method **comprising** the steps of
- collecting a first acoustical signal (S1),
- collecting a second acoustical signal (S2), whereby in the collected signals a different level of background noise is present,
- estimating background noise level (NE1, NE2) from at least one of the signals collected or from a third acoustical signal,
- in response to the background noise estimating step, using at least one background noise level parameter (NE1, NE2) for selecting at least one combining parameter (g1, g2), and
- in response to said selecting step, using said summing parameter for combining the first and acoustical signals (S1, S2) to form a combined signal (S) which has less background noise than the second signal collected.
